# EUROPÄISCHE PATENTSCHRIFT

(11) **EP 2 089 266 B1**
(45) Veröffentlichungstag und Bekanntmachung des Hinweises auf die Patenterteilung: **17.03.2010**
(21) Anmeldenummer: 07818596.4
(22) Anmeldetag: 01.10.2007
(51) Int. Cl.: B62D 15/02, B60W 30/06

(54) **PARKLENKASSISTENT MIT VERBESSERTER QUEREINPARKFUNKTION**
PARKING STEERING ASSISTANT WITH IMPROVED TRANSVERSE PARKING FUNCTION
SYSTÈME D'AIDE AU STATIONNEMENT AVEC FONCTION DE STATIONNEMENT EN BATAILLE AMÉLIORÉE

(30) Priorität: 08.11.2006 DE 102006052575
(43) Veröffentlichungstag der Anmeldung: 19.08.2009
(73) Patentinhaber: Volkswagen Aktiengesellschaft, 38436 Wolfsburg (DE)
(72) Erfinder: SCHÖNING, Volkmar, 30900 Wedemark (DE); WUTTKE, Ulrich, 38126 Braunschweig (DE); ROHLFS, Michael, 38531 Rötgesbüttel (DE)
(86) Internationale Anmeldenummer: PCT/EP2007/008516
(87) Internationale Veröffentlichungsnummer: WO 2008/055567

(56) Entgegenhaltungen:
- EP-A- 0 835 796
- EP-A- 1 510 439
- WO-A-2005/014371
- DE-A1-102005 017 362

## Beschreibung

Die Erfindung betrifft einen Parklenkassistenten sowie ein Verfahren zum Unterstützen des Einparkens eines Kraftfahrzeugs, wobei der Parklenkassistent mindestens einen Sensor zum Erfassen von Hindernissen und/oder Freiflächen in einer Umgebung quer zu einer Längsrichtung des Kraftfahrzeugs, eine mit dem mindestens einen Sensor gekoppelte Auswerte- und Steuereinheit zum Auswerten von Sensorsignalen des mindestens einen Sensors und Steuern von Fahrzeugsystemen umfasst, um in einem aktivierten automatischen Einparkmodus das Kraftfahrzeug in eine Parklücke ohne einen Lenkeingriff eines Fahrers einzuparken, wobei der automatische Einparkmodus mittels des Erfassens einer Handlung und/oder einer Kombination von Handlungen des Fahrers aktivierbar ist, die der Fahrer bei einem vorschriftsmäßig selbstständig ausgeführten Einparkvorgang immer ausführt, beispielsweise mittels des Erfassens einer Betätigung eines Fahrtrichtungswahlbedienelements aktivierbar ist.

Moderne Kraftfahrzeuge werden heutzutage mit Komfort- und Assistenzsystemen ausgeliefert, die einem Fahrer das Führen eines Kraftfahrzeugs stark erleichtern. Zu diesen Assistenzsystemen gehören u.a. Parkassistenzsysteme. Parkassistenzsysteme unterstützen das Einparken des Kraftfahrzeugs in eine Parklücke, die parallel zu einer Fahrbahn oder quer zu einer Fahrbahn ausgerichtet sein kann. Hierbei ist die längere Kante einer als rechteckig angenommenen Parklücke ausschlaggebend für eine Einordnung der Orientierung. Die Parkassistenzsysteme umfassen einen oder mehrere Sensoren, mit denen eine Umgebung des Kraftfahrzeugs nach Hindernissen und/oder Freiräumen abgesucht wird. Ist eine Parklücke erkannt, so liefert ein Parkassistenzsystem Unterstützungshinweise für einen Fahrer, wie er das Fahrzeug zu führen hat, um das Fahrzeug in die erkannte Parklücke einzuparken. Besonders komfortable Systeme sind in der Lage, einzelne oder alle hierfür notwendigen Fahrzeugsysteme selbständig zu steuern. Ein solches System wird als Parklenkassistenzsystem oder Parklenkassistent bezeichnet

Messsensoren zum Erfassen eines Nahbereichs bzw. einer Umgebung eines Kraftfahrzeugs, die an einer Seitenflanke des Kraftfahrzeugs angeordnet sind, sind beispielsweise aus der DE 103 21 904 A1 bekannt. Solche Sensoren nutzen in der Regel ein Schallreflektionsprinzip. Der Sensor sendet Schall, vorzugsweise in einem für Menschen nicht hörbaren Frequenzbereich, aus und misst den an Hindernissen reflektierten Schall. Anhand der Laufzeit und der Richtung, aus der das Schallsignal reflektiert wurde, kann eine Entfernung und Richtung des Hindernisses relativ zu dem Kraftfahrzeug ermittelt werden. Die derzeit verfügbaren Sensoren, die zu Kosten erhältlich sind, die einen Serieneinsatz in einem Kraftfahrzeug gestatten, sind jedoch nur in der Lage, Hindernisse in einem Umgebungsbereich von bis zu etwa 4 m zu erfassen. Parallel zur Fahrbahn ausgerichtete Parklücken lassen sich bei einer Vorbeifahrt auch in einem Abstand von etwa 1 m von einer Vorderseite der Parklücke, die der Fahrbahn zugewandt ist, in der Regel vollständig erfassen. Parklücken für ein Quereinparken des Kraftfahrzeugs lasse sich hingegen in ihrer Tiefe in der Regel nicht ausreichend erfassen, da viele Fahrzeuge eine Fahrzeuglänge von über 4 m aufweisen und bei einer Vorbeifahrt an einer Parklücke im Abstand von 1 m nur Parklückentiefen bis zu 3 m erkannt werden können. Kraftfahrzeuge weise jedoch häufig eine Länge von mehr als 4 m auf.

Ein einfaches Parkassistenzsystem ist aus der DE 10 2004 046 631 A1 bekannt, bei dem ein Abstand des Kraftfahrzeugs zum im Umfeld des Kraftfahrzeugs vorhandenen Gegenständen durch mindestens eine Abstandsmesseinrichtung erfasst wird und ein Freigabesignal zur Signalisierung einer kollisionsfreien Fahrtmöglichkeit eines Kraftfahrzeugs und/oder ein Stoppsignal zur Signalisierung einer drohenden Kollision des Kraftfahrzeugs erzeugbar sind. Das Freigabesignal wird hierbei erzeugt, wenn der Abstand zu erfassten Gegenständen so groß ist, dass bei maximalem Lenkeinschlag eine kollisionsfreie Fahrt des Fahrzeugs vorbei an den erfassten Gegenständen möglich ist. Das Stoppsignal wird erzeugt, wenn der Abstand zu dem mindestens einen erfassten Gegenstand so gering ist, dass auch bei maximalem Lenkeinschlag eine kollisionsfreie Fahrt des Fahrzeugs an dem erfassten Gegenstand vorbei nicht möglich ist.

Aus der DE 10 2004 006 468 A1 sind eine Vorrichtung und ein Verfahren zur Unterstützung eines Fahrers beim Einparken eines Kraftfahrzeugs in eine Parallel- oder Querparklücke bekannt, wobei mindestens ein Segment für einen Soll-Fahrweg des Kraftfahrzeugs in die Parallel- oder Querparklücke berechenbar ist. Eine Abweichung eines Ist-Fahrwegs des Kraftfahrzeugs von dem Soll-Fahrweg ist mittels mindestens eines Sensors erfassbar und mittels einer Regeleinrichtung sind kontinuierlich Fahr- und/oder Lenkanweisungen mindestens über einen Teilweg zum Einparken in die Parallel- oder Querparklücke in Abhängigkeit der Abweichung berechenbar.

Aus der DE 10 2005 017 361 A1 ist schließlich eine Bedieneinrichtung eines Fahrerassistenzsystems zum Unterstützen eines Fahrers eines Kraftfahrzeugs bekannt, wobei das Fahrerassistenzsystem eine Mehrzahl von Assistenzfunktionen aufweist und die Bedieneinrichtung einer Anzeigevorrichtung aufweist. Die Bedieneinrichtung dient zur Aktivierung einer bedingten ersten Assistenzfunktion, die eine Funktion mindestens einer weiteren zweiten Assistenzfunktion ist, und die Anzeigevorrichtung zeigt den Zustand der bedingten ersten Assistenzfunktion und den Zustand der mindestens einen weiteren zweiten Assistenzfunktion an. Bei der ersten bedingten Assistenzfunktion kann es sich um eine Einparkassistenzfunktion handeln, die ein unterstütztes oder automatisches Einparken durchführt. Die zweite Assistenzfunktion kann beispielsweise das Vermessen oder Beurteilen einer Parklücke umfassen.

WO 2005/014371 A beschreibt die Merkmale des Oberbegriffs des Anspruchs 1.

Der Erfindung liegt ausgehend vom Stand der Technik die technische Aufgabe zugrunde, einen Parklenkassistenten und ein Verfahren zum Unterstützen des Einparkens eines Fahrzeugs zu schaffen, mit denen eine Unterstützung eines Fahrers beim Einparken des Kraftfahrzeugs, insbesondere in eine Quer zur Fahrbahnrichtung ausgerichteten Parklücke, verbessert wird.

Die technische Aufgabe wird erfindungsgemäß durch Gegenstände mit den Merkmalen der Patentansprüche 1 und 5 gelöst. Weitere vorteilhafte Ausgestaltungen der Erfindung ergeben sich aus den Unteransprüchen.

Der Erfindung liegt der Gedanke zugrunde, einerseits möglichst wenig Bedienhandlungen eines Fahrers zu erfordern und andererseits möglichst auch Parkvorgänge automatisch zu unterstützen, wenn eine Parklücke beispielsweise hinsichtlich ihrer Tiefe, gemessen quer zur Fahrtrichtung einer Fahrbahn, nicht ausreichend ermittelbar ist. Für einen Parklenkassistenten eingangs genannter Art ist daher vorgesehen, dass der automatische Einparkmodus ohne eine Fahrereingabe zur Bestätigung eines Einparkvorschlags direkt aktivierbar ist, d.h. mittels des Erfassens einer Handlung und/oder einer Kombination von Handlungen des Fahrers aktivierbar ist, die der Fahrer bei einem vorschriftsmäßig selbstständig ausgeführten Einparkvorgang immer ausführt, beispielsweise eine Betätigung eines Fahrtrichtungswahlbedienelements, sofern anhand der erfassten Hindernisse und/oder Freiflächen für eine Parklücke, in die das Kraftfahrzeug von seiner aktuellen Position aus automatisch eingeparkt werden kann, zuverlässig ermittelt ist, dass eine beim Einparken zu überfahrende Fläche auch unter Berücksichtigung von vorgegebenen Sicherheitsabständen und/oder Messtoleranzen des mindestens einen Sensors als frei von Hindernissen erkannt ist, und vor einer Aktivierbarkeit des automatischen Einparkmodus eine Fahrereingabe zur Bestätigung eines Einparkvorschlags vorgesehen ist, sofern die zu überfahrende Fläche nicht ausreichend als frei von Hindernissen erkannt ist. Handlungen die ein Fahrer immer bei einem vorschriftsmäßigen Einparkvorgang ausführt, sind solche Handlungen, die notwendig sind, um das Kraftfahrzeug angemessen zu bewegen, und solche, die eine gesetzlich vorgeschriebene Signalisierung usw. umfassen. Nicht gemeint sind Handlungen, die der Fahrer aus Komfortgründen oder persönlichen Vorlieben regelmäßig vornimmt, beispielsweise ein Reduzieren der Lautstärke eines Autoradios usw.
Eine Handlungskombination kann bei einem Fahrzeug mit einem Automatikgetriebe beispielsweise ein Wählen der Fahrrichtung Rückwärts und ein Freigeben des Bremspedals umfassen. Ein Verfahren zum Unterstützen des Einparkens eines Kraftfahrzeugs umfasst somit die Schritte: Erfassen von Sensorsignalen mittels mindestens eines Sensors zum Ermitteln von Freiräumen und/oder Hindernissen quer zu einer Fahrtrichtung der Kraftfahrzeugs; Auswerten der Sensorsignale mittels einer Auswerte- und Steuereinheit zum Ermitteln einer Parklücke; Unterbreiten eines Einparkvorschlages; Erfassen einer Handlung und/oder einer Kombination von Handlungen eines Fahrers, die der Fahrer bei einem vorschriftsmäßig selbstständig ausgeführten Einparkvorgang immer ausführt, beispielsweise einer Betätigung eines Fahrtrichtungswahlbedienelements (z.B. eines Gangwahlhebels eines manuellen Schaltgetriebes), und hiervon abhängiges Aktivieren eines automatischen Einparkmodus der Auswerte- und Steuereinheit, die im aktivierten automatischen Einparkmodus Steuerbefehle für Fahrzeugsysteme erzeugt und an diese ausgibt, um das Kraftfahrzeug ohne einen Lenkeingriff eines Fahrers in die Parklücke einzuparken. Hierbei ist vorgesehen, dass der automatische Einparkmodus ohne eine Fahrereingabe zur Bestätigung eines Einparkvorschlags direkt aktivierbar ist, sofern anhand der erfassten Hindernisse und/oder Freiflächen für eine Parklücke, in die das Kraftfahrzeug von seiner aktuellen Position aus automatisch eingeparkt werden kann, zuverlässig ermittelt ist, dass eine beim Einparken zu überfahrende Fläche auch unter Berücksichtigung von vorgegebenen Sicherheitsabständen und/oder Messtoleranzen des mindestens einen Sensors als frei von Hindernissen erkannt ist, und vor einer Aktivierbarkeit des automatischen Einparkmodus eine Fahrereingabe zur Bestätigung eines Einparkvorschlags vorgesehen ist, sofern die zu überfahrende Fläche nicht ausreichend als frei von Hindernissen erkannt ist. Hierdurch wird der Vorteil erreicht, dass zum einen ein automatisches Einparken ohne eine zusätzliche Bestätigung eines Einparkvorschlags mittels eines Bedienens eines Bedienelements möglich ist, indem der automatische Einparkmodus durch eine im gewöhnlichen Einparkvorgang vorgenommene Handlung, beispielsweise durch ein Einlegen eines Rückwärtsgangs, d.h. das Betätigen des Fahrtrichtungswahlbedienelements, erfolgt. Zusätzlich ist es auch möglich, in solche Parklücken in dem automatischen Einparkmodus einzuparken, deren Tiefe bei einer Vorbeifahrt des Kraftfahrzeugs an der Parklücke nicht ausreichend erfasst werden kann oder deren Länge unter Berücksichtigung aller vorgegebener Sicherheitsabstände und/oder Messtoleranzen des zur Vermessung der Parklücke eingesetzten mindestens einen Sensors nicht ausreichend ist. In einem solchen Fall ist eine Bestätigung des Einparkvorschlags durch den Fahrer gesondert vor einer Aktivierbarkeit des automatischen Einparkmodus erforderlich, um sicherzustellen, dass die Parklücke tatsächlich für einen Einparkvorgang geeignet ist. In der Regel wird beispielsweise eine nicht ausreichende Ermittlung der Tiefe nur bei Querparklücken auftreten. Ein Fahrer hat jedoch bei der Vorbeifahrt ohne größere Schwierigkeiten erkennen können, ob die Parklücke tatsächlich auf einer für das Fahrzeug erforderlichen Tiefe frei ist. Somit werden bei einem erfindungsgemäßen Gegenstand unnötige Abfragen vermieden, jedoch die notwendigen Abfragen ausgeführt, um ein sicheres automatisches Einparken möglich zu machen.

Für ein Parklenkassistenzsystem ist es von Vorteil, wenn eine hintere Begrenzung, beispielsweise ein Bordstein, zusätzlich zu einer seitlichen Begrenzung ermittelbar ist, die beispielsweise durch abgestellte andere Kraftfahrzeuge gegeben ist. Diese hintere Begrenzung der Parklücke wird beispielsweise beim parallelen Einparken bevorzugt verwendet, um die Endorientierung des Kraftfahrzeugs in der Parklücke festzulegen. Um jedoch auch ein Einparken in solchen Situationen ohne eine Abfrage vorzusehen, in denen eine hintere Begrenzung nicht erfasst worden ist, ist bei einer bevorzugten Ausführungsform der Erfindung vorgesehen, dass das Ausgeben der Bestätigungsaufforderung und Erfassen der Fahrereingabe zur Bestätigung nur erfolgt, sofern ermittelt ist, dass die Parklücke für ein paralleles Einparken nicht ausreichend lang ist. Die Fahrereingabe zur Bestätigung ist somit nur vorgesehen, sofern zusätzlich zu der beispielsweise nicht ausreichend erfassten Tiefe der Parklücke die Parklücke für ein paralleles Einparken nicht ausreichend lang ist. Bei dieser Ausführungsform wird davon ausgegangen, dass, sofern dieses möglich ist oder keine Anhaltspunkte vorliegen, dass der Fahrer ein Quereinparken beabsichtigt, ein paralleles Einparken ausgeführt werden soll. Eine bevorzugte Endausrichtung des Kraftfahrzeugs in der Parklücke kann beispielsweise anhand der Hindernisse (anderen Kraftfahrzeugen usw.) in der Umgebung ermittelt werden.

Ein weiteres Kriterium, was herangezogen werden kann, um zu ermitteln, ob ein paralleles Einparken oder ein Quereinparken seitens des Fahrers erwünscht ist, stellt ein Winkel zwischen einer Längsrichtung des Kraftfahrzeugs und einer Vorderseite der Parklücke dar. Stoppt der Fahrer das Fahrzeug in einem Winkel der Längsachse bezogen auf die Vorderseite der Parklücke, der einen so genannten Auslösewinkel übertrifft, so ist davon auszugehen, dass der Fahrer ein Quereinparken beabsichtigt. Bei einer bevorzugten Ausführungsform ist daher vorgesehen, dass die Fahrereingabe zur Bestätigung nur vorgesehen ist, sofern ein Winkel zwischen der Längsrichtung des Kraftfahrzeugs und einer Vorderseite der Parklücke einen vorgegebenen Auslösewinkel überschreitet.

Um die Einschätzung des Fahrers, dass die Parklücke zum Einparken eine ausreichende Tiefe oder Länge aufweist, abzusichern, ist bei einer bevorzugten Ausführungsform vorgesehen, dass mit der Auswerte- und Steuereinheit mindestens ein weiterer Sensor zum Erfassen von Hindernissen und/oder Freiräumen in einer Umgebung des Kraftfahrzeugs entlang der Längsrichtung des Kraftfahrzeugs gekoppelt ist und die von diesem mindestens einen weiteren Sensor erfassten Messsignale zur Ermittlung der Tiefe und/oder Länge der Parklücke während des automatischen Einparkens berücksichtigbar sind. Mittels des weiteren Sensors werden somit Hindernisse entlang der Längsrichtung des Fahrzeugs erfasst, gegen die das Kraftfahrzeug während des automatischen Einparkvorgangs stoßen könnte. Diese Ausführungsform weist den zusätzlichen Vorteil auf, dass in die Parklücke eintretende Personen oder sich in die Parklücke bewegende Objekte zuverlässig erkannt werden, um eine Kollision während des automatischen Einparkvorgangs zu vermeiden. Als Länge der Parklücke wird immer eine Länge entlang einer Fahrbahnseite der Parklücke verstanden.

Die Erfindung wird nachfolgend an Hand eines bevorzugten Ausführungsbeispiels näher erläutert. Hierbei zeigen:
- Fig. 1: ein Blockdiagramm zur Veranschaulichung eines Verfahrens zum Unterstützen eines Einparkvorgangs;
- Fig. 2: eine schematische Darstellung eines Kraftfahrzeugs mit einem Parklenkassistenten;
- Fig. 3: eine schematische Darstellung zur Erläuterung eines Parkvorgangs in eine Parallelparklücke;
- Fig. 4-7: eine zeitliche Abfolge eines Einparkvorgangs in eine Querparklücke;
- Fig. 8: eine schematische Darstellung einer Anzeigevorrichtung; und
- Fig. 9: ein Bedienelement zum Erfassen einer Fahrereingabe zur Bestätigung eines Einparkvorschlags.

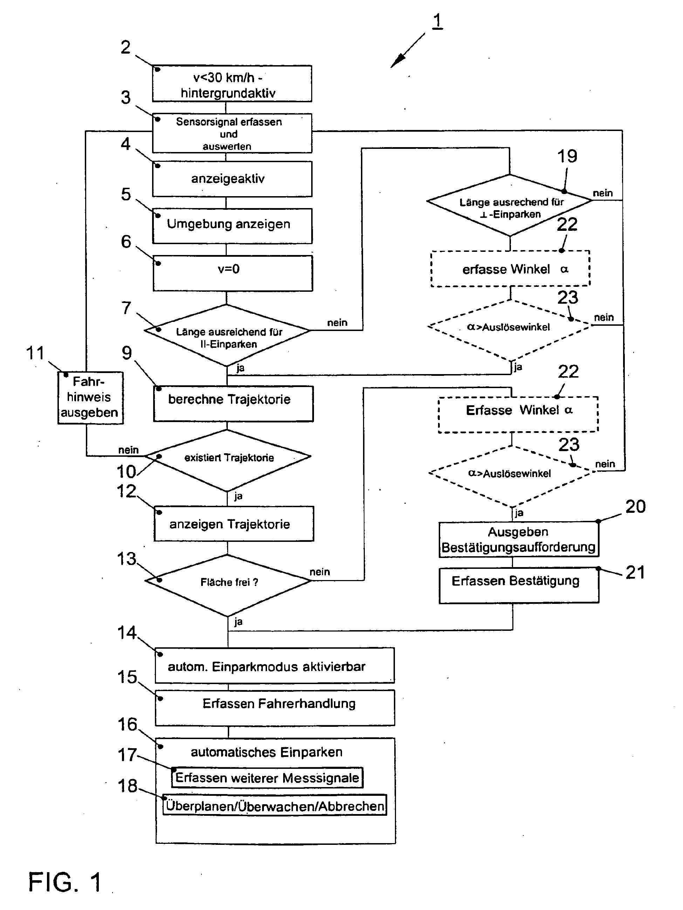

In Fig. 1 ist ein Blockdiagramm zur Veranschaulichung eines Verfahrens 1 zum Unterstützen des Einparkens eines Kraftfahrzeugs schematisch dargestellt. Sobald eine Fahrzeuggeschwindigkeit kleiner gleich 30 km/h ist, wird ein Parklenkassistent automatisch im Hintergrund aktiviert 2. Ist der Parklenkassistent aktiv, werden mit einem Sensor, der vorzugsweise als Ultraschallentfernungsmesssensor ausgebildet ist, Freiflächen und/oder Hindernisse in einer Umgebung des Kraftfahrzeugs erfasst 3.

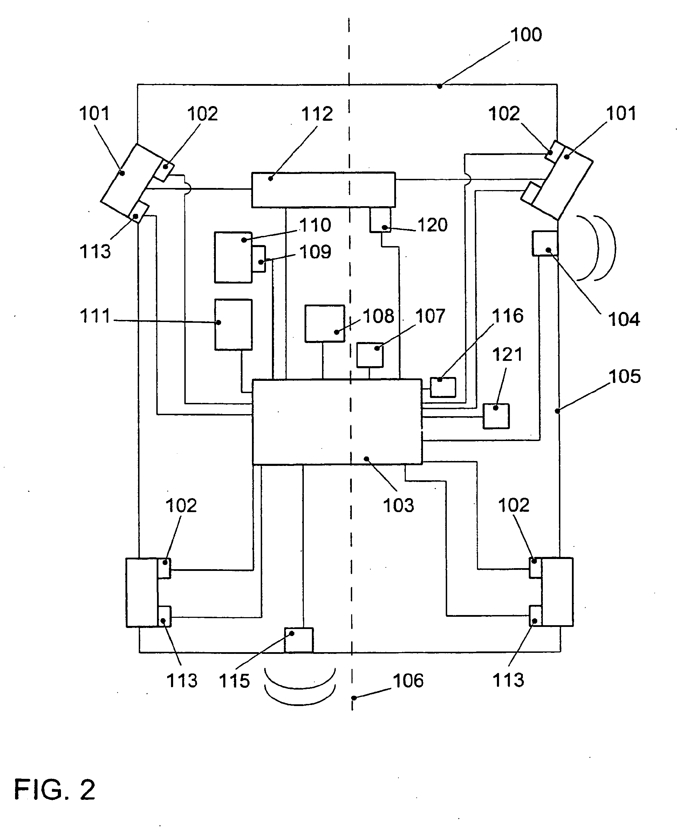

In Fig. 2 ist schematisch ein Kraftfahrzeug 100 dargestellt. Um eine Geschwindigkeit des Kraftfahrzeugs zu erfassen, sind an lenkbaren Rädern 101 Radimpulssensoren 102 angeordnet. Mit Hilfe der Signale der Radimpulssensoren kann eine Auswerte- und Steuereinheit 103 die Fahrzeuggeschwindigkeit ermitteln. Ist die Fahrzeuggeschwindigkeit kleiner gleich 30 km/h, so wird der Parklenkassistent aus einem Ruhemodus in einen aktiven Modus versetzt. Im aktiven Modus werden, wie mittels Block 2 in Fig. 1 angedeutet, Sensorsignale mittels eines als Entfernungsmesssensor ausgebildeten Sensors 104 erfasst. Der Sensor 104 strahlt Schallsignale ab und empfängt die von Hindernissen im Messbereich reflektierten Schallsignale. Anhand der Laufzeit kann der Sensor die Entfernung zum Hindernis bestimmen. Der Sensor 104 ist an einer Seitenflanke 105 des Kraftfahrzeugs 100 angeordnet. Somit werden Hindernisse und/oder Freiflächen in einer Umgebung des Kraftfahrzeugs 100 quer zu einer Längsrichtung des Kraftfahrzeugs 100 erfasst. Die Längsrichtung ist mittels einer gestrichelten Linie 106 angedeutet. Die Sensorsignale des Sensors 104 werden von der Auswerte- und Steuereinheit 103 ausgewertet 3. Hierbei werden mögliche Parklücken ermittelt. Will ein Fahrer sein Kraftfahrzeug einparken, so wird der Parklenkassistent mittels des Betätigens eines Bedienelements 107 in einen anzeigeaktiven Modus versetzt 4. Im anzeigeaktiven Modus werden für den Fahrer relevante Informationen für das Einparken ausgegeben. Vorzugsweise wird eine Umgebung des Kraftfahrzeugs 100 grafisch dargestellt, in der eine geeignete Parklücke angezeigt ist 5. Hierfür verfügt das Kraftfahrzeug über eine Anzeigevorrichtung 108. Kommt das Kraftfahrzeug zum Stillstand 6, wird bei der in Fig. 1 dargestellten Ausführungsform des Verfahrens 1 zunächst überprüft, ob eine Parklücke mit einer ausreichenden Länge für ein Paralleleinparken vorhanden ist 7. Dieser Verfahrensschritt kann jedoch auch schon ausgeführt werden, während das Fahrzeug noch in Bewegung ist. Für diesen Verfahrensschritt ist es ebenfalls nicht erforderlich, dass der Parklenkassistent im anzeigeaktiven Modus ist. Ist die Parklücke ausreichend lang für ein Paralleleinparken, so versucht die Auswerte- und Steuereinheit 103 eine Trajektorie zu berechnen, entlang derer das Kraftfahrzeug 100 in die Parklücke automatisch eingeparkt werden kann 9. Es wird geprüft, ob eine Trajektorie existiert 10. Existiert keine Trajektorie, entlang derer das Fahrzeug ausgehend von der aktuellen Position des Kraftfahrzeugs automatisch in die Parklücke eingeparkt werden kann, so werden über die Anzeigevorrichtung 108 oder andere Ausgabemittel, beispielsweise akustisch oder haptisch usw., Fahranweisungen an den Fahrer ausgegeben 11. Die Fahranweisungen umfassen Vorschläge, wie der Fahrer das Fahrzeug in eine andere Position bewegen kann, von der aus eine Trajektorie zum automatischen Einparken in die Parklücke existiert.

Existiert eine Trajektorie, so wird die Trajektorie auf der Anzeigevorrichtung 108 angezeigt 12. Ferner wird überprüft, ob die beim Einparken zu überfahrende Fläche auch unter Berücksichtigung von vorgegebenen Sicherheitsabständen und/oder Messtoleranzen des mindestens einen Sensors 104 als frei von Hindernissen erkannt ist 13, beispielsweise die Tiefe der Parklücke ausreichend ist. Ist dies der Fall, so ist der automatische Einparkmodus des Parklenkassistenten aktivierbar 14. Als Handlung des Fahrers, die der Fahrer bei einem vorschriftsmäßig selbstständig ausgeführten Einparkvorgang immer ausführt und die den automatischen Einparkmodus des Parklenkassistenten aktiviert, wird das Einlegen eines Rückwärtsgangs gewählt. Hierzu werden Messsignale eines Messsensors an einem Fahrtrichtungswahlbedienelement 109 überwacht. Das Fahrtrichtungswahlbedienelement 109 kann beispielsweise ein Schalthebel eines Schaltgetriebes 110 sein. Wird über das Fahrtrichtungswahlbedienelement 109 die Fahrtrichtung rückwärts durch den Fahrer gewählt, so wird diese Wahl erfasst 15. Hierdurch wird der automatische Einparkmodus des Parklenkassistenten aktiviert. Die Auswerte- und Steuereinheit 103 steuert die Fahrzeugsysteme an, die notwendig sind, um das Fahrzeug automatisch ohne einen Fahrereingriff in die Parklücke einzuparken 16. Hierzu kann die Auswerte- und Steuereinheit 103 beispielsweise einen Fahrzeugantrieb 111, eine beispielsweise elektromechanisch ausgebildete Lenkung 112, Bremsen 113 usw. ansteuern.

Vorzugsweise werden ferner Messsignale eines weiteren Sensors 115 erfasst 17 und ausgewertet 18. Der weitere Sensor 115 erfasst Hindernisse und Freiräume in der Umgebung des Kraftfahrzeugs 100 entlang der durch die gestrichelte Linie 106 angedeuteten Längsrichtung des Kraftfahrzeugs. Die Messsignale des weiteren Sensors 115 werden verwendet, um die Tiefe und/oder Länge der Parklücke während des automatischen Einparkens erneut oder verbessert zu bestimmen. Ferner werden beim parallelen Einparken sowie bei einem Einparken in eine Querparklücke die Informationen des weiteren Messsensors dazu verwendet, Hindernisse zu erfassen, die sich möglicherweise in die Parklücke bewegen oder bewegt haben, bevor das Fahrzeug automatisch in die Parklücke eingeparkt ist.

Ein beispielsweise in die als ausreichend groß erkannte Parklücke eintretender Passant wird so während des automatischen Einparkvorgangs detektiert und der automatische Einparkvorgang abgebrochen oder zumindest unterbrochen.

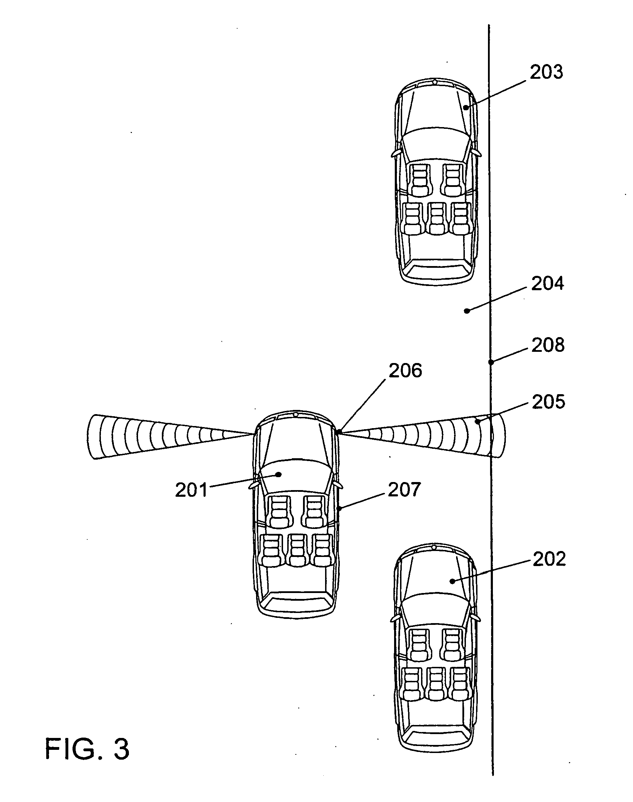

In Fig. 3 ist zur Veranschaulichung die Situation dargestellt, in der ein Kraftfahrzeug 200 an weiteren parkenden Kraftfahrzeugen 202 und 203 vorbeifährt, zwischen denen eine Parklücke 204 angeordnet ist. Von einem Sensor 206 zum Erfassen von Hindernissen und/oder Freiflächen ausgesandte Ultraschallsignale sind mittels einer Sendekeule 205 schematisch dargestellt. Die Größe der Sendekeule 205 gibt den Bereich an, in dem der Sensor 206 Hindernisse und/oder Freiflächen erkennen kann. Es ist gut zu erkennen, dass der Sensor 206, der an einer Seitenflanke 207 in einem vorderen Bereich des Kraftfahrzeugs 201 angeordnet ist, bei einer Vorbeifahrt an der Parallelparklücke 204 diese vollständig, einschließlich einer hinteren Begrenzung 208, erfassen kann. Die hintere Begrenzung 208 kann beispielsweise ein Bordstein sein. Sobald das Kraftfahrzeug 201 die Parklücke 204 passiert hat und neben dem weiteren Kraftfahrzeug 203 anhält, kann somit von dem Parklenkassistenten eine Trajektorie für das automatische Einparken bestimmt und auf einer Anzeigevorrichtung angezeigt werden. Ohne eine vorherige Bestätigung des in Form der dargestellten Trajektorie unterbreiteten Einparkvorschlags kann das automatische Einparken durch das Einlegen eines Rückwärtsgangs ausgelöst werden.

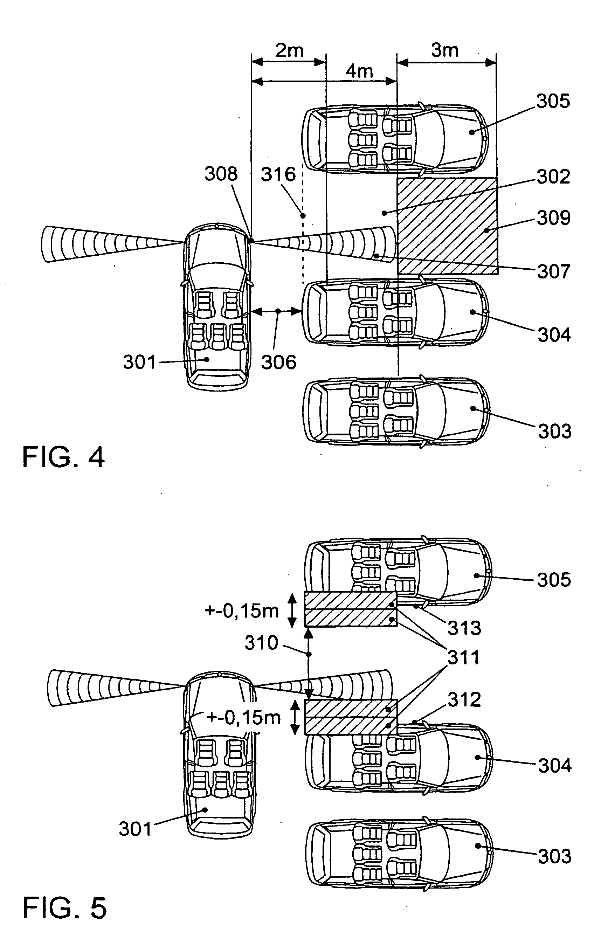

In den Fig. 4 bis 7 ist ein Ablauf eines Einparkvorgangs eines Kraftfahrzeugs 301 in eine Querparklücke 302 dargestellt. Das Kraftfahrzeug 301 fährt in einem normalen Sicherheitsabstand an quer zur Fahrbahnrichtung ausgerichteten, parkenden anderen Kraftfahrzeugen 303, 304, 305 vorbei. Der Sicherheitsabstand, der mittels eines Pfeils 306 angedeutet ist, beträgt 1 bis 1,5 m. Da eine Sendekeule 307, die den Erfassungsbereich eines Sensors 308 angibt, nur eine Länge von etwa 4 m aufweist, kann eine Tiefe der Parklücke 302 nicht vollständig erfasst werden. Ein schraffiert dargestellter Bereich 309 der Parklücke 302 wird mittels des Sensors 308 nicht erfasst.

Zusätzlich besteht die Schwierigkeit, einen Abstand 310 zwischen den anderen Kraftfahrzeugen 304, 305, die die Parklücke 302 begrenzen, genau zu bestimmen. Der Abstand 310 gibt die Länge der Parklücke 302 an. Dieses ist in Fig. 5 angedeutet. Die in Fig. 5 dargestellten weiteren schraffierten Bereiche 311 deuten jeweils die Unsicherheit für eine Bestimmung der Seitenflanken 312, 313 der anderen Kraftfahrzeuge 304 bzw. 305 an. Die durch die weiteren schraffierten Bereiche 311 angedeutete Unsicherheit beträgt jeweils ungefähr 0,15 m. Zusätzlich zur Fahrzeugbreite sollte ein Bereich zum Ein- und Aussteigen auf jeder Seite des Fahrzeugs von etwa 0,4 m zur Verfügung stehen. Bei einer Fahrzeugbreite von 1,80 m ergäbe sich somit ein tatsächlich erforderlicher Mindestabstand zwischen den anderen Fahrzeugen 304, 305 von 2,90 m. Solch große, d.h. lange, Querparklücken sind jedoch in der Realität selten vorzufinden. Der aufgrund der Messungenauigkeiten zugefügte Betrag von etwa 0,3 m wird nicht unbedingt benötigt, um das Fahrzeug in die Querparklücke 302 einzuparken. Die Verantwortung hierfür muss jedoch der Fahrer übernehmen.

Ist die Querparklücke 302 als zumindest grundsätzlich mögliche Parklücke, d.h., als ausreichend lange Parklücke, erkannt, kann für diese eine Trajektorie berechnet werden. Die Länge bezieht sich in dem hier dargelegten immer auf eine Abmessung einer an die Fahrbahn angrenzenden Vorderseite 316 der Parklücke 302. In dem in Fig. 1 dargestellten Verfahrensablauf ist die Abfrage, ob eine ausreichend lange Parklücke zum Quereinparken, gegebenenfalls ohne die Messtoleranzen und/oder Sicherheitsabstände zu berücksichtigen, vorhanden ist, in einem Abfrageblock 19 angedeutet. Die Berechnung einer Trajektorie für das Einparken erfolgt wie beim Parallelparken gemäß Verfahrensblock 9. Existiert eine Trajektorie, um das Fahrzeug von der aktuellen Position, in der es sich in Ruhe befindet, in die Parklücke 302 einzuparken, so wird diese Trajektorie auf der Anzeigevorrichtung 108 angezeigt 12. Bei einer Querparklücke ist aufgrund des eingesetzten Sensors 308, dessen Messbereich nicht ausreichend ist, um die Tiefe der Parklücke 302 vollständig zu erfassen, zwangsläufig die Tiefe der Parklücke 302 nicht ausreichend erfasst. Somit ist nicht die gesamte die beim Einparken zu überfahrende Fläche als frei von Hindernissen erkannt. Sollte dies in Ausnahmefällen doch der Fall sein, so läuft das Einparkverfahren analog zum oben beschrieben Einparkverfahren ab, das bezüglich des Paralleleinparkens beschrieben ist. Ansonsten wird dem Fahrer eine Bestätigungsaufforderung, beispielsweise über die Anzeigevorrichtung 108, ausgegeben 20.

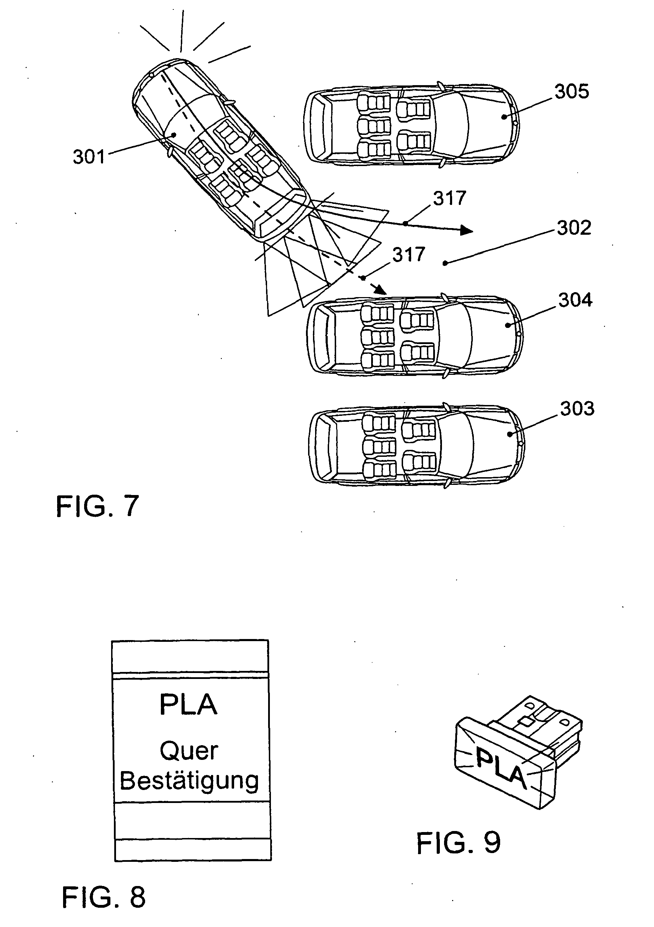

In Fig. 8 ist eine mögliche Ausgestaltung einer solchen angezeigten Bestätigungsaufforderung für eine.Mensch-Maschine-Schnittstelle dargestellt.

Durch ein erneutes Betätigen des Bedienelements 107 oder das Betätigen eines weiteren Bedienelements 116, von dem eine beispielhafte Ausführungsform in Fig. 9 dargestellt ist, wird eine Bestätigung des Fahrers erfasst 21. Ist die Bestätigung erfasst worden, wird der automatische Einparkmodus aktivierbar 14. Der weitere Einparkvorgang läuft wie beim Paralleleinparken identisch ab. Die Sensorsignale des weiteren Sensors 115 werden hierbei während des Einparkvorgangs verwendet, um die Tiefe der Parklücke, die bisher noch nicht ausreichend bestimmt ist, zu ermitteln. Dieses ist in Fig. 7 angedeutet.

Die mittels des weiteren Sensors 115 erfassten Messsignale werden ebenfalls verwendet, um die Einparktrajektorie 117 während des automatischen Einparkens zu überplanen.

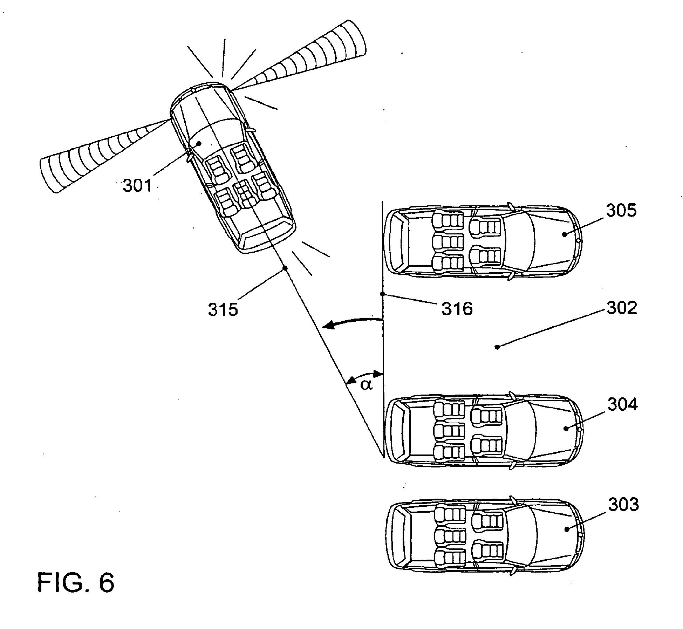

Die Entscheidung eines Fahrers, in eine Querparklücke einparken zu wollen, dokumentiert sich in der Regel auch dadurch, dass er sein Fahrzeug leicht schräg gegen eine Fahrbahn ausgerichtet zum Stillstand bringt. Dieses ist in Fig. 6 angedeutet. Eine Fahrzeuglängsrichtung 315 des Kraftfahrzeugs 301 weist einen Winkel α bezüglich einer Vorderseite 316 der Querparklücke 302 auf. Bei einer bevorzugten Ausführungsform wird vor einem Berechnen einer Trajektorie 9 oder vor dem Ausgeben der Bestätigungsaufforderung 20 der Fahrzeugwinkel α relativ zu der Vorderseite 316 der Parklücke 302 erfasst 22 und anschließend ermittelt, ob der Winkel α größer als ein Auslösewinkel ist 23. Nur wenn dies der Fall ist, wird die Trajektorie berechnet 9 oder die Bestätigungsaufforderung ausgegeben 17. In gleicher Weise kann als zusätzliches Kriterium ein Betätigen des Blinkers abgefragt werden. Hierdurch wird es möglich, unnötige Bestätigungen in solchen Situationen auszugeben, in denen der Fahrer mit großer Wahrscheinlichkeit kein Einparken in die Parklücke 302 ausführen möchte. Zur Ermittlung des Winkels α können Sensorwerte aus einem Lenkwinkelsensor 120, Informationen eines Navigationssystems 121, der Radimpulssensoren 102 usw. verwendet werden. Für den Fachmann ergibt es sich, dass das in Fig. 1 dargestellte Verfahren sowie das im Zusammenhang mit den Fig. 3 bis 7 beschriebene Einparkverfahren hinsichtlich der Abfolge einzelner Schritte modifiziert werden kann, ohne von dem Grundgedanken der Erfindung abzuweichen.

Der Parklenkassistent kann in Form von Software und/oder Hardware ausgeführt sein. Vorzugsweise ist der Parklenkassistent in einem Kraftfahrzeug auf vernetzten Komponenten als verteilter Dienst bzw. als verteilte Funktion ausgebildet. Dies bedeutet, dass unterschiedliche Hardwarekomponenten und Steuergeräte verwendet werden, um die benötigte Funktionalität zur Verfügung zu stellen. Der Parklenkassistent kann jedoch auch als eigenständige Vorrichtung ausgebildet sein, die im Fahrzeug verteilte Komponenten umfasst, die miteinander kommunikationstechnisch verknüpft sind, sowie eine Schnittstelle aufweisen, um die übrigen Fahrzeugsysteme anzusteuern, die zum Einparken des Fahrzeugs notwendig sind.

### Bezugszeichenliste

- 1 bis 23: Verfahrensschritte eines Verfahrens zum Einparken eines Kraftfahrzeugs
- 100: Kraftfahrzeug
- 101: lenkbare Räder
- 102: Radimpulssensoren
- 103: Auswerte- und Steuereinheit
- 104: Sensor
- 105: Seitenflanke
- 106: gestrichelte Linie
- 107: Bedienelement
- 108: Anzeigevorrichtung
- 109: Fahrtrichtungswahlbedienelement
- 110: Schaltgetriebe
- 111: Fahrzeugantrieb
- 112: Lenkung
- 113: Bremsen
- 115: weiterer Sensor
- 116: weiteres Bedienelement
- 120: Lenkwinkelsensor
- 121: Navigationssystem
- 201: Kraftfahrzeug
- 202, 203: weitere Kraftfahrzeuge
- 204: Parallelparklücke
- 205: Sendekeule
- 206: Sensor
- 207: Seitenflanke
- 208: hintere Begrenzung der Parklücke
- 301: Kraftfahrzeug
- 302: Querparklücke
- 303 bis 305: andere Kraftfahrzeuge
- 306: Pfeil
- 307: Sendekeule
- 308: Sensor
- 309: schraffierter Bereich
- 310: Abstand zwischen den anderen Kraftfahrzeugen 304 und 305 (Länge der Parklücke 302)
- 311: weitere schraffierte Bereiche
- 312, 313: Seitenflanken
- 315: Längsrichtung des Kraftfahrzeugs
- 316: Vorderseite der Parklücke 302
- 317: Einparktrajektorie

## Patentansprüche

1. Parklenkassistent für ein Kraftfahrzeug (100, 201, 301) umfassend
mindestens einen Sensor (104, 206, 308) zum Erfassen von Hindernissen und/oder Freiflächen in einer Umgebung quer zu einer Längsrichtung (315) des Kraftfahrzeugs (100, 201, 301),
eine mit dem mindestens einen Sensor (104, 206, 308) gekoppelte Auswerte- und Steuereinheit (103), die Sensorsignale des mindestens einen Sensors (104, 206, 308) auswentet und Fahrzeugsysteme steuert, um in einem aktivierten automatischen Einparkmodus das Kraftfahrzeug (100, 201, 301) in eine Parklücke (204, 302) ohne einen Lenkeingriff eines Fahrers einzuparken,
wobei der automatische Einparkmodus mittels des Erfassens einer Handlung und/oder einer Kombination von Handlungen des Fahrers aktiviert wird, die der Fahrer bei einem vorschriftsmäßig selbstständig ausgeführten Einparkvorgang immer ausführt, beispielsweise einer Betätigung eines Fahrtrichtungswahlbedienelements (109),
**dadurch gekennzeichnet, dass**
der automatische Einparkmodus ohne eine Fahrereingabe zur Bestätigung eines Einparkvorschlags direkt aktiviert wird, sofern anhand der erfassten Hindernisse und/oder Freiflächen für eine Parklücke (204, 302) , in die das Kraftfahrzeug (100, 201, 301) von seiner aktuellen Position aus automatisch eingeparkt werden kann, zuverlässig ermittelt ist, dass eine beim Einparken zu überfahrende Fläche auch unter Berücksichtigung von vorgegebenen Sicherheitsabständen und/oder Messtoleranzen des mindestens einen Sensors (104; 206; 308) als frei von Hindernissen erkannt ist, und vor einer Aktivierung des automatischen Einparkmodus eine Fahrereingabe zur Bestätigung eines Einparkvorschlags vorgesehen ist, sofern die zu überfahrende Fläche nicht ausreichend als frei von Hindernissen erkannt ist.

2. Parklenkassistent nach Anspruch 1, **dadurch gekennzeichnet, dass** die Fahrereingabe zur Bestätigung nur vorgesehen ist, sofern zusätzlich die Parklücke (204, 302) für ein paralleles Einparken nicht ausreichend lang ist.

3. Parklenkassistent nach Anspruch 1 oder 2, **dadurch gekennzeichnet, dass** die Fahrereingabe zur Bestätigung nur vorgesehen ist, sofern ein Winkel (α) zwischen der Längsrichtung (315) des Kraftfahrzeugs (100, 201, 301) und einer Vorderseite (316) der Parklücke (302) einen vorgegebenen Auslösewinkel überschreitet.

4. Parklenkassistent nach einem der vorangehenden Ansprüche, **dadurch gekennzeichnet, dass** mit der Auswerte- und Steuereinheit mindestens ein weiterer Sensor (115) zum Erfassen von Hindernissen und/oder Freiräumen in der Umgebung des Kraftfahrzeugs (100, 201, 301) entlang der Längsrichtung (315) des Kraftfahrzeugs gekoppelt ist und die von diesem mindestens einen weiteren Sensor (115) erfassten Messsignale zur Ermittlung der Tiefe und/oder Länge der Parklücke (204, 302) während des automatischen Einparkens berücksichtigt werden.

5. Verfahren zum Unterstützen des Einparkens eines Kraftfahrzeugs (100, 201, 301) umfassend die Schritte:
Erfassen von Sensorsignalen mittels mindestens eines Sensors (104, 206, 308) zum Ermitteln von Freiräumen und/oder Hindernissen quer zu einer Fahrtrichtung der Kraftfahrzeugs (100, 201, 301);
Auswerten der Sensorsignale mittels einer Auswerte- und Steuereinheit (103) zum Ermitteln einer Parklücke (204, 302);
Unterbreiten eines Einparkvorschlages;
Erfassen einer Handlung und/oder einer Kombination von Handlungen eines Fahrers, die der Fahrer bei einem vorschriftsmäßig selbstständig ausgeführten Einparkvorgang immer ausführt, beispielsweise einer Betätigung eines Fahrtrichtungswahlbedienelements (109), und hiervon abhängiges Aktivieren eines automatischen Einparkmodus der Auswerte- und Steuereinheit (103), die im aktivierten automatischen Einparkmodus Steuerbefehle für Fahrzeugsysteme erzeugt und an diese ausgibt, um das Kraftfahrzeug (100, 201, 301) ohne einen Lenkeingriff des Fahrers in die Parklücke (204, 302) einzuparken, **dadurch gekennzeichnet, dass**
der automatische Einparkmodus ohne eine Fahrereingabe zur Bestätigung eines Einparkvorschlags direkt aktiviert wird, sofern anhand der erfassten Hindernisse und/oder Freiflächen für eine Parklücke (204, 302), in die das Kraftfahrzeug (100, 201, 301) von seiner aktuellen Position aus automatisch eingeparkt werden kann, zuverlässig ermittelt ist, dass eine beim Einparken zu überfahrende Fläche auch unter Berücksichtigung von vorgegebenen Sicherheitsabständen und/oder Messtoleranzen des mindestens einen Sensors (104; 206; 308) als frei von Hindernissen erkannt ist, und
vor einer Aktivierung des automatischen Einparkmodus eine Fahrereingabe zur Bestätigung eines Einparkvorschlags vorgesehen ist, sofern die zu überfahrende Fläche nicht ausreichend als frei von Hindernissen erkannt ist.

6. Verfahren nach Anspruch 5, **dadurch gekennzeichnet, dass** Ausgeben der Bestätigungsaufforderung und Erfassen der Fahrereingabe zur Bestätigung nur erfolgt, sofern ermittelt ist, dass die Parklücke (204, 302) für ein paralleles Einparken nicht ausreichend lang ist.

7. Verfahren nach Anspruch 5 oder 6, **dadurch gekennzeichnet, dass** ein Winkel (α) zwischen der Längsrichtung (315) des Kraftfahrzeugs und einer Vorderseite (316) der Parklücke (204, 302) ermittelt wird und das Ausgeben der Bestätigungsaufforderung und Erfassen der Fahrereingabe zur Bestätigung nur erfolgt, sofern der ermittelte Winkel (α) einen vorgegebenen Auslösewinkel überschreitet.

8. Verfahren nach einem der Ansprüche 5 bis 7, **dadurch gekennzeichnet, dass** mittels mindestens einem weiteren mit der Auswerte- und Steuereinheit (103) gekoppelten Sensors (115) Hindernisse und/oder Freiräume in der Umgebung des Kraftfahrzeugs (100, 201, 301) entlang der Längsrichtung (315) des Kraftfahrzeugs (100, 201, 301) erfasst werden und die von diesem mindestens einen weiteren Sensor (115) erfassten Messsignale zur Ermittlung der Tiefe und/oder Länge der Parklücke (204, 302) während des automatischen Einparkens berücksichtigt werden.

## Claims

1. Parking steering assistant for a motor vehicle (100, 201, 301), comprising
at least one sensor (104, 206, 308) for sensing obstacles and/or free areas in a surrounding area transverse with respect to a longitudinal direction (315) of the motor vehicle (100, 201, 301), an evaluation and control unit (103) which is coupled to the at least one sensor (104, 206, 308) and which evaluates the sensor signals of the at least one sensor (104, 206, 308) and controls vehicle systems in order to park the motor vehicle (100, 201, 301) in a parking space (204, 302) in an activated automatic parking mode without a steering intervention by a driver,
wherein the automatic parking mode is activated by means of the sensing of an action and/or a combination of actions of the driver which the driver always carries out in the case of a parking process which is carried out automatically according to the regulations, for example activation of a travel direction selector operator control element (109),
**characterized in that**
the automatic parking mode is activated directly without a driver input for confirming a parking proposal in so far as on the basis of the sensed obstacles and/or free areas for a parking space (204, 302) into which the motor vehicle (100, 201, 301) can be parked automatically from its current position, it is reliably determined that an area which is to be travelled over during the parking process is detected as being free of obstacles, also taking into account predefined safety distances and/or measuring tolerances of the at least one sensor (104; 206; 308), and a driver input for confirming a parking proposal is provided before activation of the automatic parking mode in so far as the area which is to be travelled over is detected as not being sufficiently free of obstacles.

2. Parking steering assistant according to Claim 1, **characterized in that** the driver input for providing confirmation is provided only in so far as the parking space (204, 302) is in addition not sufficiently long for a parallel parking process.

3. Parking steering assistant according to Claim 1 or 2, **characterized in that** the driver input for providing confirmation is provided only in so far as an angle (α) between the longitudinal direction (315) of the motor vehicle (100, 201, 301) and a front side (316) of the parking space (302) exceeds a predefined triggering angle.

4. Parking steering assistant according to one of the preceding claims, **characterized in that** at least one further sensor (115) for sensing obstacles and/or free spaces in the surroundings of the motor vehicle (100, 201, 301) in the longitudinal direction (315) of the motor vehicle is coupled to the evaluation and control unit, and the measuring signals which are sensed by this at least one further sensor (115) are taken into account in order to determine the depth and/or length of the parking space (204, 302) during the automatic parking process.

5. Method for assisting the parking of a motor vehicle (100, 201, 301), comprising the steps:
sensing of sensor signals by means of at least one sensor (104, 206, 308) for determining free spaces and/or obstacles transversely with respect to a travel direction of the motor vehicle (100, 201, 301);
evaluation of the sensor signals by means of an evaluation and control unit (103) for determining a parking space (204, 302);
issuing of a parking proposal;
sensing of an action and/or combination of actions by a driver which the driver always carries out in the case of a parking process which is carried out independently according to the regulations, for example activation of a travel direction selector operator control element (109), and
as a function thereof, activation of an automatic parking mode of the evaluation and control unit (103) which generates control instructions for vehicle systems in the activated automatic parking mode and outputs the control instructions to said vehicle systems in order to park the motor vehicle (100, 201, 301) in the parking space (204, 302) without a steering intervention by the driver, **characterized in that**
the automatic parking mode is activated directly without a driver intervention for confirming a parking proposal in so far as on the basis of the sensed obstacles and/or free areas for a parking space (204, 302) into which the motor vehicle (100, 201, 301) can be parked automatically from its current position, it is reliably determined that an area which is to be travelled over during the parking process is detected as being free of obstacles, also taking into account predefined safety distances and/or measuring tolerances of the at least one sensor (104; 206; 308), and
before activation of the automatic parking mode a driver input is provided for confirming a parking proposal in so far as the area which is to be travelled over is detected as not being sufficiently free of obstacles.

6. Method according to Claim 5, **characterized in that** the confirmation request is output and the driver input for providing confirmation is sensed only in so far as it is determined that the parking space (204, 302) is not sufficiently long for parallel parking.

7. Method according to Claim 5 or 6, **characterized in that** an angle (α) between the longitudinal direction (315) of the motor vehicle and a front side (316) of the parking space (204, 302) is determined, and the confirmation request is output and the driver input for providing confirmation is sensed only in so far as the angle (α) which is determined exceeds a predefined triggering angle.

8. Method according to one of Claims 5 to 7, **characterized in that** by means of at least one further sensor (115) which is coupled to the evaluation and control unit (103), obstacles and/or free spaces in the surroundings of the motor vehicle (100, 201, 301) in the longitudinal direction (315) of the motor vehicle (100, 201, 301) are sensed, and the measurement signals sensed by this at least one further sensor (115) are taken into account in order to determine the depth and/or length of the parking space (204, 302) during the automatic parking process.

## Revendications

1. Assistance à la direction pour le stationnement d'un véhicule automobile (100, 201, 301), qui comprend
au moins un détecteur (104, 206, 308) qui détecte des obstacles et/ou des surfaces libres dans l'environnement transversal par rapport au sens de la longueur (315) du véhicule automobile (100, 201, 301),
une unité (103) d'évaluation et de commande couplée au détecteur ou aux détecteurs (104, 206, 308), qui commande les signaux du ou des détecteurs (104, 206, 308) et active des systèmes du véhicule pour, lorsque le mode de stationnement automatique est activé, stationner le véhicule automobile (100, 201, 301) dans un emplacement de stationnement (204, 302) sans que le conducteur intervienne sur le volant,
le mode de stationnement automatique étant activé au moyen de la détection d'une manoeuvre et/ou d'une combinaison de manoeuvres que le conducteur exécute toujours lorsqu'il exécute lui-même une opération de stationnement dans les règles, par exemple l'actionnement d'un élément (109) de sélection de l'indicateur de direction,
**caractérisée en ce que**
le mode de stationnement automatique est activé directement sans que le conducteur confirme une proposition de stationnement si, à l'aide des obstacles et/ou des surfaces libres qui ont été détectés pour un emplacement de stationnement (204, 302) dans lequel le véhicule (100, 201, 301) peut être stationné automatiquement depuis la position qu'il occupe, il est déterminé de manière fiable que même en tenant compte de distances prédéterminées de sécurité et/ou de tolérances de mesure du ou des détecteurs (104; 206; 308), la surface qui doit être traversée lors de la manoeuvre de stationnement est exempte d'obstacle et
**en ce qu'**avant l'activation du mode de stationnement automatique, il est prévu que le conducteur confirme une proposition de stationnement s'il est détecté que la surface à traverser n'est pas suffisamment libre d'obstacles.

2. Assistance à la direction pour le stationnement selon la revendication 1, **caractérisée en ce que** la confirmation par le conducteur n'est attendue que si de plus l'emplacement de stationnement (204, 302) n'est pas suffisamment long pour permettre un stationnement en parallèle.

3. Assistance à la direction pour le stationnement selon les revendications 1 ou 2, **caractérisée en ce que** la confirmation par le conducteur n'est attendue que si l'angle (α) entre le sens de la longueur (315) du véhicule automobile (100, 201, 301) et le côté avant (316) de l'emplacement de stationnement (302) dépasse un angle prédéterminé de déclenchement.

4. Assistance à la direction pour le stationnement selon l'une des revendications précédentes, **caractérisée en ce qu'**au moins un autre détecteur (115) qui détecte des obstacles et/ou des espaces libres dans l'environnement du véhicule automobile (100, 201, 301) dans le sens de la longueur (315) du véhicule automobile est couplé à l'unité d'évaluation et de commande et **en ce que** les signaux de mesure détectés par ce ou ces autres détecteurs (115) sont pris en compte pour la détermination de la profondeur et/ou de la longueur de l'emplacement de stationnement (204, 302) pendant le stationnement automatique.

5. Procédé d'assistance au stationnement d'un véhicule automobile (100, 201, 301), comprenant les étapes suivantes :
- saisie de signaux au moyen d'un ou de plusieurs détecteurs (104, 206, 308) qui déterminent la présence d'espaces libres et/ou d'obstacles dans la direction transversale à la direction d'avancement du véhicule automobile (100, 201, 301),
- évaluation des signaux des détecteurs au moyen d'une unité (103) d'évaluation et de commande qui détermine la présence d'un emplacement de stationnement (204, 302),
- émission d'une proposition de stationnement,
- détection d'une manoeuvre et/ou d'une combinaison de manoeuvres du conducteur que le conducteur exécute toujours lorsqu'il exécute lui-même une manoeuvre de stationnement dans les règles, par exemple l'actionnement d'un élément (109) de sélection de direction, et, en fonction de cela, activation du mode de stationnement automatique de l'unité (103) d'évaluation et de commande qui, lorsque le mode de stationnement automatique est activé, forme des commandes pour les systèmes du véhicule et les leur délivre pour stationner le véhicule automobile (100, 201, 301) dans l'emplacement de stationnement (204, 302) sans intervention du conducteur sur le volant,
**caractérisé en ce que**
le mode de stationnement automatique est activé directement sans que le conducteur doive confirmer une proposition de stationnement si, à l'aide des obstacles et/ou surfaces libres qui ont été détectés pour un emplacement de stationnement (204, 302) dans lequel le véhicule automobile (100, 201, 301) peut être stationné automatiquement depuis la position qu'il occupe, il est déterminé de manière fiable que même en tenant compte de distances de sécurité et/ou de tolérances de mesure prédéterminées du ou des détecteurs (104; 206; 308), la surface qui doit être traversée lors de la manoeuvre de stationnement est libre d'obstacles et
**en ce qu'**avant l'activation du mode de stationnement automatique, il est prévu que le conducteur confirme une proposition de stationnement s'il n'a pas été détecté que la surface à traverser est suffisamment libre d'obstacles.

6. Procédé selon la revendication 5, **caractérisé en ce que** l'émission de la demande de confirmation et la détection de la confirmation du conducteur n'ont lieu que s'il a été déterminé que l'emplacement de stationnement (204, 302) n'est pas suffisamment long pour une manoeuvre de stationnement parallèle.

7. Procédé selon les revendications 5 ou 6, **caractérisé en ce que** l'angle (α) entre le sens de la longueur (315) du véhicule automobile et le côté avant (316) de l'emplacement de stationnement (204, 302) est déterminé et **en ce que** l'émission de la demande de confirmation et la détection de la confirmation du conducteur n'ont lieu que si l'angle (α) déterminé dépasse un angle de déclenchement prédéterminé.

8. Procédé selon l'une des revendications 5 à 7, **caractérisé en ce que** des obstacles et/ou des espaces libres sont détectés dans l'environnement du véhicule automobile (100, 201, 301) dans le sens de la longueur (315) du véhicule automobile (100, 201, 301) à l'aide d'au moins un autre détecteur (115) couplé à l'unité (103) d'évaluation et de commande et **en ce que** les signaux de mesure déterminés par ce ou ces autres détecteurs (115) sont pris en compte pour déterminer la profondeur et/ou la longueur de l'emplacement de stationnement (204, 302) pendant la manoeuvre de stationnement automatique.
